# EUROPÄISCHE PATENTSCHRIFT

(11) **EP 1 451 378 B1**
(45) Veröffentlichungstag und Bekanntmachung des Hinweises auf die Patenterteilung: **09.05.2007**
(21) Anmeldenummer: 02787727.3
(22) Anmeldetag: 19.11.2002
(51) Int. Cl.: C21D 9/00

(54) **AUS EINEM KOHLENSTOFFHALTIGEN STAHL BESTEHENDES BEFESTIGUNGSELEMENT UND VERFAHREN ZU SEINER HERSTELLUNG**
FASTENING ELEMENT MADE OF A CARBON-CONTAINING STEEL AND METHOD FOR THE PRODUCTION THEREOF
ELEMENT DE FIXATION A BASE D'ACIER CONTENANT DU CARBONE ET PROCEDE PERMETTANT DE LE PRODUIRE

(30) Priorität: 28.11.2001 DE 10158197
(43) Veröffentlichungstag der Anmeldung: 01.09.2004
(73) Patentinhaber: EJOT VERBINDUNGSTECHNIK GmbH & Co. KG, 57334 Bad Laasphe (DE)
(72) Erfinder: FRIEDERICH, Heinrich, 68649 Gross-Rohrheim (DE); SCHMOOCK, Reinhard, 57250 Netphen (DE)
(74) Vertreter: Eisenführ, Speiser & Partner
(86) Internationale Anmeldenummer: PCT/EP2002/012943
(87) Internationale Veröffentlichungsnummer: WO 2003/046229

(56) Entgegenhaltungen:
- EP-A- 1 020 536
- GB-A- 311 337
- GB-A- 1 371 640
- US-A- 4 021 274
- US-A1- 2001 014 262
- US-B1- 6 213 884

## Beschreibung

Die Erfindung betrifft ein Verfahren zur Herstellung eines eine gehärtete Funktionsspitze aufweisenden Befestigungselements, das aus einem kohlenstoffhaltigen Stahl besteht, der nach Erwärmung auf Austenitisierungstemperatur und anschließendem Abschrecken Martensit bildet, wobei das Befestigungselement insgesamt auf Austenitisierungstemperatur erwärmt, auf dieser Temperatur gehalten und anschließend abgeschreckt sowie sodann einem Anlassvorgang unterworfen wird. Sie betrifft ferner ein Befestigungselement, insbesondere eine eine gewinde- sowie ggf. lochformende Formzone aufweisende Schraube, dessen Gefüge teils aus Martensit, teils aus angelassenem Martensit besteht.

In harte Werkstoffe einzutreibende Befestigungselemente benötigen eine entsprechend harte Funktionsspitze. Bei dieser kann es sich - vorliegend bevorzugt - um die ein Gegengewinde formende und ggf. das zuvor benötigte Loch vorbohrende oder fließformende Formzone einer Schraube handeln. Die Funktionsspitze kann aber auch die Eintreibspitze eines Schießbolzens oder die schneidende Ringkante eines Stanzniets sein.

Bei Schrauben aus niedrig legiertem Kohlenstoffstahl (Vergütungs- oder Einsatzstahl) ist es bekannt, diese in Durchlauf-Ofenanlagen zu härten und anzulassen oder unter Aufkohlung bzw. Carbonitrierung einsatzzuhärten und anzulassen. Insbesondere nach anschließender galvanischer Beschichtung sind derartige Schrauben anfällig gegen wasserstoffinduzierte verzögerte Sprödbruchbildung oder Spannungsrisskorrosion. Es ist ferner aus der DE-AS 22 11 608 bekannt, dem gewindeformenden Abschnitt einer derartigen Schraube größte Härte zu verleihen, die sich nur geringfügig in den Gewindekern erstreckt, welcher im übrigen eine geringere Härte (aber höhere Zähigkeit) aufweist. Die insoweit eingesetzte Induktionshärtung ermöglicht zwar die gewünschte begrenzte Härtung, erfordert aber die vereinzelte Behandlung der Schrauben in einer Ringspule mit entsprechendem Zeit- und Kostenaufwand.

Es ist schließlich auch bekannt, dem Durchhärten einer aus Vergütungsstahl bestehenden Schraube (Erwärmen und längeres Halten auf Austenitisierungstemperatur sowie Abschrecken in Wasser oder Öl) mit anschließendem Anlassen eine auf die Formzone beschränkte induktive Härtung folgen zu lassen, indem der äußere Randbereich der Formzone kurzzeitig erneut auf Austenitisierungstemperatur erwärmt und neuerlich abgeschreckt wird. Dadurch wird auch hier nur dieser Randbereich zu hartem Martensit umgewandelt, während der Kern die Gefügestruktur des durch das voraufgegangene Anlassen erzeugten angelassenen Martensits behält. Allerdings bilden sich zwischen jener Randzone und dem Kerngefüge Unstetigkeiten, weil es dort zu einem unbeabsichtigten Anlasseffekt der induktiven Erwärmung kommt. Diese Unstetigkeiten können in radialer Richtung so weit eindringen, dass sie das dort zunächst vorhandene vergütete Gefüge partiell verdrängen und auf diese Weise einen Torsionsbruch-gefährdeten Querschnitt erzeugen.

Die Erfindung will an die Stelle des zumeist vielstufigen und in jedem Falle aufwändigen Verfahrens zur Herstellung eines Befestigungselements mit harter Funktionsspitze eine vereinfachte Herstellung ohne Beschränkung des Einsatzspektrums der Befestigungselemente setzen und auch einen einfacheren Aufbau solcher Befestigungselemente angeben.

Der Verfahrensaspekt der Erfindung besteht darin, dass der Anlassvorgang durch induktive Erwärmung auf eine Temperatur oberhalb der Anlasssprödigkeit erfolgt und auf den außerhalb der Funktionsspitze liegenden Bereich des Befestigungselements beschränkt wird. Dies beruht auf dem Grundgedanken, dass die Härte des durch das bekannte Austenitisieren und anschließende Abschrecken gebildeten Martensitgefüges für die Einsatzzwecke bei hartem Gegenmaterial ausreicht; diese Härte kann nach einer Weiterbildung durch Aufkohlen oder Carbonitrieren im randnahen Bereich noch vergrößert werden. Alsdann wird nicht durch Erwärmen des gesamten Befestigungselements auf Anlasstemperatur die Härte des Martensitgefüges (im Interesse höherer Zähigkeit) wieder herabgesetzt, und es wird auch nicht die Funktionsspitze - also etwa die gewindeformende und ggf. lochbildende Formzone einer Schraube - einer weitergehenden Sonderbehandlung unterworfen, sondern es wird in dem nicht zur Funktionsspitze bzw. Formzone gehörenden Rest des Befestigungselements (z.B. Schraube) durch partielles, kurzzeitiges Anlassen mittels induktiver Erwärmung ein vergütetes Gefüge aus angelassenem Martensit erzeugt, welches im Befestigungszustand den dabei erzeugten Spannungen ohne Spannungsrisskorrosion und Sprödbruchbildung widerstehen kann. Die Anlassbehandlung im Ofen entfällt und verringert den Herstellungsaufwand entsprechend.

Dabei ist unter Martensit neben nicht angelassenem Martensit auch entspannter und niedrig angelassener Martensit zu verstehen. Solcher kann sich ergeben, wenn das Befestigungselement beispielsweise einer Temperbehandlung (ca. 180° - 220°C) nach galvanischer Beschichtung oder einer Einbrenn-/Aushärtebehandlung (annähernd 300°C) im Rahmen einer Tauchbeschichtung unterworfen wird. Demgegenüber führt die Erwärmung auf eine Temperatur oberhalb der Anlasssprödigkeit (≥ 360°C) zu (hoch) angelassenem Martensit.

Die Härte der Funktionsspitze kann weiter erhöht werden, wenn mindestens diese während der Erwärmung und des Haltens auf Austenitisierungstemperatur aufgekohlt bzw. carbonitriert wird. Die Randhärte der Funktionsspitze/Gewindeformzone kann dadurch auf 750 - 950 HV0,3 bei einer Kemhärte von 350 - 650 HV0,3 gesteigert werden. Wird auch der außerhalb der Funktionsspitze liegende Bereich des Befestigungselements aufgekohlt bzw. carbonitriert, so ergeben sich insgesamt vier Bereiche unterschiedlicher Härte, nämlich je zwei in axialer (Spitze/Schaft) und radialer (Rand/Kern) Richtung.

Die bevorzugte induktive Erwärmung der Befestigungselemente im Durchlauf durch einen Linieninduktor erlaubt eine hohe Behandlungsgeschwindigkeit und einen entsprechend hohen Ausstoß, der die Mehrkosten derartiger Befestigungselemente gegenüber herkömmlichen gleicher Qualität weiter reduziert. Während der induktiven Erwärmung der Restlänge des Befestigungselements, also aller außerhalb seiner Funktionsspitze liegenden Abschnitte, wird vorteilhaft die Funktionsspitze - etwa im Wasserbad - gekühlt, um deren Härte nicht durch ein Erwärmen auf Anlasstemperatur zu beeinträchtigen.

Soweit es sich bei dem Befestigungselement um eine Schraube handelt, wird die Funktionsspitze von einer zumindest gewindeformenden Formzone gebildet. Diese kann sich aber zur Schraubenspitze ferner in einem lochformenden Abschnitt fortsetzen, also einem Bohrabschnitt oder einem fließlochformenden Abschnitt. In vergleichbarer Weise kann das Befestigungselement aber auch ein Schießbolzen oder ein Niet, insbesondere ein Stanzniet sein.

In entsprechender Weise besteht ein erfindungsgemäßes Befestigungselement mit einer gehärteten Funktionsspitze aus einem kohlenstoffhaltigen Stahl, dessen Gefüge teils martensitisch, teils angelassen martensitisch ist, wobei die Funktionsspitze durchgehend martensitisch ist und der Rest des Befestigungselements aus einem durch kurzzeitige induktive Erwärmung angelassenen Martensit besteht. Die aus Martensit bestehende Funktionsspitze hat die zum Eintreiben des Befestigungselements in ein hartes Gegenmaterial erforderliche hohe Härte, während der angelassene Martensit des restlichen Befestigungselements (infolge seiner kurzzeitigen induktiven Erwärmung auf Anlasstemperatur) eine Kerbzähigkeit aufweist, welche ihn auch unter Spannung der Gefährdung durch wasserstoffinduzierte Sprödbruchbildung oder Spannungsrisskorrosion widerstehen lässt. Dabei ist unter Martensit auch hier neben nicht angelassenem ferner entspannter und niedrig angelassener Martensit zu verstehen.

### Beispiel

Ein Drahtabschnitt (Stab) aus niedrig legiertem Kohlenstoffstahl wie SAE 1018 / 18B3 / 16MnCr5 (der unter Aufkohlen oder Carbonitrieren einsatzgehärtet werden kann) oder SAE 1022 / 22MnB4Cr / 35B2 / 34CrMo4 (der vergütet werden kann) oder ein hochlegierter kohlenstoffhaltiger Stahl wie z.B. X20Cr13 oder X38CrMoV15 (d.h. Edelstahl) wird an einem Ende zur Bildung eines Schraubenkopfes angestaucht. Am anderen Ende wird durch Kneifen ein Bohr- oder fließlochformender Teil der Funktionsspitze angeformt. Alsdann wird auf den dazwischenliegenden Schaft ein Gewinde aufgewalzt, dessen Anfangsgänge dem Gewindeformen dienen und zu der die Funktionsspitze bildenden Formzone gehören.

Die Rohschraube wird dann im Ofen auf Austenitisierungstemperatur erwärmt und je nach Werkstoff/Abmessung/Ofentyp für 10 bis 60 Minuten auf dieser Temperatur gehalten; dabei kann einsatzhärtbarer Stahl aufgekohlt bzw. carbonitriert werden. Anschließend wird die Schraube in Wasser oder Öl abgeschreckt.

Hierauf werden die außerhalb der Funktionsspitze liegenden Abschnitte der Schraube (Kopf, ggf. gewindefreier Schaft, Haltegänge des Gewindes) in einen Linearinduktor für 3 bis 60 Sekunden induktiv auf eine Anlasstemperatur erwärmt, während gleichzeitig die Funktionsspitze gekühlt wird, beispielsweise in einem Wasserbad.

Abschließend kann die Schraube zum Zwecke des Korrosionsschutzes beschichtet werden.

## Patentansprüche

1. Verfahren zur Herstellung eines eine gehärtete Funktionsspitze aufweisenden Befestigungselements, das aus einem kohlenstoffshaltigen Stahl besteht, der nach Erwärmung auf Austenitisierungstemperatur und anschließendem Abschrecken Martensit bildet, wobei das Befestigungselement insgesamt auf Austenitisierungstemperatur erwärmt, auf dieser Temperatur gehalten und anschließend abgeschreckt sowie sodann einem Anlassvorgang unterworfen wird,
**dadurch gekennzeichnet, dass** der Anlassvorgang durch induktive Erwärmung auf eine Temperatur oberhalb der Anlasssprödigkeit erfolgt und auf den außerhalb der Funktionsspitze liegenden Bereich des Befestigungselements beschränkt wird.

2. Verfahren nach Anspruch 1,
**dadurch gekennzeichnet, dass** als kohlenstoffhaltiger Stahl ein niedrig legierter Kohlenstoffstahl eingesetzt wird.

3. Verfahren nach Anspruch 1,
**dadurch gekennzeichnet, dass** als kohlenstoffhaltiger Stahl ein hochlegierter Stahl eingesetzt wird.

4. Verfahren nach Anspruch 2,
**dadurch gekennzeichnet, dass** mindestens die Funktionsspitze während der Erwärmung auf Austenitisierungstemperatur aufgekohlt bzw. carbonitriert wird.

5. Verfahren nach einem der Ansprüche 1 bis 4,
**dadurch gekennzeichnet, dass** die induktive Erwärmung im Durchlauf durch einen Linieninduktor erfolgt.

6. Verfahren nach einem der Ansprüche 1 bis 5,
**dadurch gekennzeichnet, dass** die Funktionsspitze während der induktiven Erwärmung des übrigen Befestigungselements gekühlt wird.

7. Verfahren nach einem der Ansprüche 1 bis 6,
**dadurch gekennzeichnet, dass** das Befestigungselement eine Schraube und die Funktionsspitze eine gewinde- sowie ggf. lochformende Formzone ist.

8. Verfahren nach einem der Ansprüche 1 bis 6,
**dadurch gekennzeichnet, dass** das Befestigungselement ein Schießnagel bzw. Setzbolzen ist.

9. Verfahren nach einem der Ansprüche 1 bis 6,
**dadurch gekennzeichnet, dass** das Befestigungselement ein Niet, insbesondere ein Stanzniet ist.

10. Aus einem kohlenstoffhaltigen Stahl bestehendes und eine gehärtete Funktionsspitze aufweisendes Befestigungselement, dessen Gefüge teils aus Martensit, teils aus angelassenem Martensit besteht,
**dadurch gekennzeichnet, dass** die Funktionsspitze durchgehend aus Martensit und der Rest des Befestigungselements aus einem durch kurzzeitige induktive Erwärmung auf eine Temperatur oberhalb der Anlasssprödigkeit angelassenen Martensit besteht.

11. Befestigungselement nach Anspruch 8,
**dadurch gekennzeichnet, dass** der Randbereich mindestens der Funktionsspitze infolge Aufkohlens bzw. Carbonitrierens einsatzgehärtet ist.

12. Befestigungselement nach Anspruch 8 oder 9,
**dadurch gekennzeichnet, dass** es eine Schraube und die Funktionsspitze eine gewinde- sowie ggf. lochformende Formzone ist.

13. Befestigungselement nach Anspruch 8 oder 9,
**dadurch gekennzeichnet, dass** es ein Schießnagel bzw. Setzbolzen ist.

14. Befestigungselement nach Anspruch 8 oder 9,
**dadurch gekennzeichnet, dass** es ein Niet, insbesondere ein Stanzniet ist.

## Claims

1. A process for the production of a fixing element which has a hardened functional tip and comprises a carbon-containing steel which after heating to austenitisation temperature and subsequent quenching forms martensite, wherein the fixing element is heated overall to the austenitisation temperature, held at that temperature and then quenched and is then subjected to an annealing operation, **characterised in that** the annealing operation is effected by inductive heating to a temperature above annealing brittleness and is restricted to the region of the fixing element, which lies outside the functional tip.

2. A process according to claim 1 **characterised in that** a low-alloyed carbon steel is used as the carbon-containing steel.

3. A process according to claim 1 **characterised in that** a high-alloyed carbon steel is used as the carbon-containing steel.

4. A process according to claim 2 **characterised in that** at least the functional tip is recarburised or carbonitrided during the operation of heating to the austenitisation temperature.

5. A process according to one of claims 1 to 4 **characterised in that** the inductive heating operation is effected in a continuous mode through a line inductor.

6. A process according to one of claims 1 to 5 **characterised in that** the functional tip is cooled during inductive heating of the rest of the fixing element.

7. A process according to one of claims 1 to 6 **characterised in that** the fixing element is a screw and the functional tip is a screwthread-forming and possibly hole-forming shaping zone.

8. A process according to one of claims 1 to 6 **characterised in that** the fixing element is a firing nail or setting bolt.

9. A process according to one of claims 1 to 6 **characterised in that** the fixing element is a rivet, in particular a stamping rivet.

10. A fixing element which comprises a carbon-containing steel and has a hardened functional tip and whose structure comprises in part martensite and in part annealed martensite, **characterised in that** the functional tip comprises martensite throughout and the remainder of the fixing element comprises a martensite annealed by short-term inductive heating to a temperature above annealing brittleness.

11. A fixing element according to claim 8 **characterised in that** the edge region at least of the functional tip is case-hardened as a result of recarburisation or carbonitriding.

12. A fixing element according to claim 8 or claim 9 **characterised in that** it is a screw and the functional tip is a screwthread-forming and possibly hole-forming shaping zone.

13. A fixing element according to claim 8 or claim 9 **characterised in that** it is a firing nail or setting bolt.

14. A fixing element according to claim 8 or claim 9 **characterised in that** it is a rivet, in particular a stamping rivet.

## Revendications

1. Procédé de fabrication d'un élément de fixation, comportant une pointe fonctionnelle trempée, qui est constitué d'acier au carbone, lequel acier forme de la martensite après chauffage à la température d'austénitisation suivi d'une trempe, l'élément de fixation étant intégralement chauffé à la température d'austénitisation, maintenu à cette température et ensuite trempé, ainsi qu'également soumis à une opération de revenu,
**caractérisé en ce que** l'opération de revenu s'effectue par chauffage inductif à une température supérieure à la fragilité de revenu et est limitée à la zone de l'élément de fixation située en dehors de la pointe fonctionnelle.

2. Procédé selon la revendication 1,
**caractérisé en ce que** l'acier au carbone utilisé est un acier au carbone faiblement allié.

3. Procédé selon la revendication 1,
**caractérisé en ce que** l'acier au carbone utilisé est un acier au carbone fortement allié.

4. Procédé selon la revendication 2,
**caractérisé en ce que,** pendant le chauffage à la température d'austénitisation, au moins la pointe fonctionnelle est carburée ou carbonitrurée.

5. Procédé selon l'une des revendications 1 à 4,
**caractérisé en ce que** le chauffage inductif s'effectue lors de la traversée d'un inducteur en ligne.

6. Procédé selon l'une des revendications 1 à 5,
**caractérisé en ce que** la pointe fonctionnelle est refroidie pendant le chauffage inductif du reste de l'élément de fixation.

7. Procédé selon l'une des revendications 1 à 6,
**caractérisé en ce que** l'élément de fixation est une vis et la pointe de fixation est une zone de formage formant un taraudage ainsi que le cas échéant un trou.

8. Procédé selon l'une des revendications 1 à 6,
**caractérisé en ce que** l'élément de fixation est un clou à scellement par explosif ou une cheville à scellement par explosif.

9. Procédé selon l'une des revendications 1 à 6,
**caractérisé en ce que** l'élément de fixation est un rivet, en particulier un rivet poinçonneur.

10. Élément de fixation en un acier au carbone et comportant une pointe fonctionnelle trempée, dont la structure est constituée pour partie de martensite et pour partie de martensite revenue,
**caractérisé en ce que** la pointe fonctionnelle est intégralement constituée de martensite et le reste de l'élément de fixation est constitué d'une martensite revenue par chauffage inductif de courte durée à une température supérieure à la fragilité au revenu.

11. Élément de fixation selon la revendication 8,
**caractérisé en ce que** la zone marginale d'au moins la pointe fonctionnelle est cémentée après carburation ou carbonitruration.

12. Élément de fixation selon la revendication 8 ou 9,
**caractérisé en ce qu'il** s'agit d'une vis et que la pointe fonctionnelle est une zone de formage, formant un taraudage ainsi que le cas échéant un trou.

13. Élément de fixation selon la revendication 8 ou 9,
**caractérisé en ce qu'il** s'agit d'un clou à scellement par explosif ou d'une cheville à scellement par explosif.

14. Élément de fixation selon la revendication 8 ou 9,
**caractérisé en ce qu'il** s'agit d'un rivet, en particulier d'un rivet poinçonneur.
